# EUROPÄISCHE PATENTSCHRIFT

(11) **EP 3 324 044 B1**
(45) Veröffentlichungstag und Bekanntmachung des Hinweises auf die Patenterteilung: **16.10.2019**
(21) Anmeldenummer: 16199730.9
(22) Anmeldetag: 21.11.2016
(51) Int. Cl.: F03D 80/00, F03D 80/80, F03D 13/20

(54) **GONDEL FÜR EINE WINDENERGIEANLAGE**
NACELLE FOR A WIND TURBINE
NACELLE D'ÉOLIENNE

(43) Veröffentlichungstag der Anmeldung: 23.05.2018
(73) Patentinhaber: Nordex Energy GmbH, 22419 Hamburg (DE)
(72) Erfinder: Rudolph, Lars Christian, 18057 Rostock (DE); Wackrow, Torsten, 18119 Rostock (DE); Muhamad, Ibrahim, 18057 Rostock (DE)
(74) Vertreter: Garrels, Sabine

(56) Entgegenhaltungen:
- EP-A2- 2 322 795
- WO-A1-2004/003381
- WO-A1-2014/037507
- DE-A1-102008 046 210
- US-A1- 2008 164 697

## Beschreibung

Die vorliegende Erfindung betrifft eine Gondel für eine Windenergieanlage. Die Gondel einer Windenergieanlage umfasst bekanntermaßen eine Tragstruktur, eine nichttragende Gondelverkleidung mit einem Tragwerk, bestehend aus Sparren, Streben und Profilen, und Anlagenkomponenten, die im Innern der Gondelverkleidung angeordnet sind. Insbesondere ist der Teil der Gondel Gegenstand der Erfindung, der als Generatorträger angeordnet ist.

Die Tragstruktur umfasst üblicherweise einen Maschinenträger aus Guss und einen Generatorträger als Schweißkonstruktion. Die Gondelverkleidung schützt die Komponenten im Inneren der Gondel gegen äußere Umwelteinflüsse. Für Windenergieanlagen und deren Einsatzbedingungen ist die Stabilität der Gondel von besonderer Bedeutung.

So ist eine Reihe von Veröffentlichungen bekannt, welche für die Gondel eine Rahmenkonstruktion aus Profilstäben aus versteiften Aluminium- oder Stahlblech vorsehen. Die Rahmenkonstruktion ist mit einer Verkleidung versehen, die aus laminierten Schalen zusammengesetzt ist, wobei die Schalen aus glasfaserverstärktem Verbundmaterial hergestellt sind (DE 102010045139 A1, DE 102006001931 A1, US 2011/0243726 A1). In WO 2008/148874 A1 ist ebenfalls eine Rahmenstruktur mit Verkleidungselementen offenbart, welche den Rotor und die anderen Aggregate trägt.

In EP 1944508 A2 wird ein röhrenförmiges Gondelgehäuse offenbart, welches überwiegend aus zwei Teilen besteht. Das vordere Ende ist mit dem Turm verbunden und nimmt in der Hauptsache das Getriebe sowie die Rotorwelle auf und das hintere Ende dient der Aufnahme des Generators. Beide Teile sind so geformt, dass sie aneinander passen. Sie sind über Gelenke und/oder Nähte miteinander verbunden.

In WO 2010/142304 A1 wird eine Gondel einer Windenergieanlage beschrieben, wobei die Gondel einen Grundrahmen aufweist, welcher auf der dem Rotor abgewandten Seite eine zum Abstützen von Anlagenkomponenten dienende Trägeranordnung umfasst. Die Trägeranordnung weist eine Abstützfläche und eine zumindest teilweise mit Abstand oberhalb der Abstützfläche angeordnete Stabilisierungseinrichtung auf.

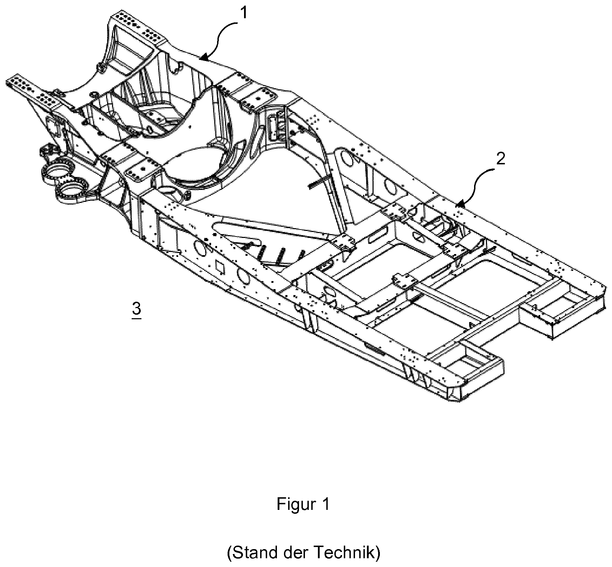

Anlagenkomponenten wie beispielsweise der Generator sind in den meisten Anwendungen auf der Tragstruktur im Innern der Gondel montiert, wobei die Tragstruktur einen bestimmten Abstand zum Boden der Gondelverkleidung aufweist, so dass der Generator nicht direkt auf dem Boden der Gondelverkleidung aufgesetzt werden kann. Zudem besitzt diese Lösung Bodenteile aus GFK, welche zur Gondelverkleidung zählen. Diese Teile sind am Generatorträger mechanisch angebunden. Durch diese Anordnung geht im Innern der Gondel viel Bauraum verloren. (siehe auch Figur 1)

Im Zuge des Wettbewerbs der Windbranche verlangt der Markt weitere Erhöhungen der Nennleistung von Windenergieanlagen. Bei Erhöhung der Leistungsklasse sowie bei der gewünschten Integration von Mittelspannungskomponenten in die Gondel muss der vorhandene Raum innerhalb der Gondel effizienter genutzt werden. Ein Nachteil ist bei den bekannten Generatorträgerkonstruktionen, verbunden mit deren Anbindungskonstruktionen der Gondelverkleidung, dass relativ viel Höhe innerhalb der Gondel verschenkt wird. Zukünftig wird eine steifere Tragstruktur benötigt, welche zusätzliche Anlagenkomponenten tragen kann, die im Innern der Gondel unterzubringen sind.

Die Grundidee in WO 2004/003381 A1 besteht in der relativ großen und variablen Service-Luke, die im Bereich des Generatorträgers im Gondelboden eingelassen ist. WO 2004/003381 A1 offenbart einen Rahmen für einen hinteren Teil einer Gondel für eine Windenergieanlage und eine Lukeneinrichtung zum Verschließen einer Öffnung in einem unteren hinteren Teil der Gondel. Die Lukeneinrichtung besteht aus einer Vielzahl von teilweise sich überlappenden Luken, welche zwischen zwei seitlichen Trägern lösbar angeordnet sind. Die seitlichen Träger sind durch einen Querträger und einen Stützträger miteinander verbunden.

In DE 102008046210 B4 wird ein Tragrahmen für einen Generator einer Windenergieanlage offenbart. Der Tragrahmen weist zwei einander gegenüberliegende Hauptträger und zwei Querträger auf, welche zusammen ein in einer Rahmenebene liegendes Viereck bilden. Die Hauptträger sind außerdem durch eine Diagonalstrebe miteinander verbunden, wobei mindestens eine der Verbindungsstellen der Diagonalstrebe mit den Hauptträgern als Gelenk mit zu der Rahmenebene orthogonaler Gelenkachse ausgebildet ist. Ein rechteckiger Zwischenrahmen auf den Querträgern dient der Aufnahme des Generators.

WO 2014037507 A1 bezieht sich auf eine Verkleidung für ein Maschinenhaus für eine Windturbine, wobei die Maschinenhausverkleidung am Maschinenträger befestigt ist. Eine Tragstruktur für die Verkleidung umfasst Querstreben und Stützstreben und ist mit dem Maschinenträger verbunden. Diese Tragstruktur wird teilweise oder ganz mit einer Verkleidung, insbesondere Folie, bespannt. Die Folie bedeckt im Wesentlichen die gesamte Oberfläche des Maschinenhauses.

US 2008/164697 A1 befasst sich mit einem Windturbinengenerator, bei dem das Übertragen eines steuerbaren Magnetflusses durch einen Zwischenraum zwischen einem Abschnitt eines rotierenden Elements und einem Abschnitt eines stationären Elements erleichtert werden soll. Der Hauptrahmen der Verkleidung ist fest mit einer Schale und mit einer abnehmbaren Abdeckanordnung verbunden. Die Schale umgibt den Generatorträger vollständig und die Komponenten sind auf einem Zwischenboden angeordnet.

### Darstellung der Erfindung

Es ist daher Aufgabe der Erfindung eine Lösung zu entwickeln, welche zu einer Schaffung von mehr nutzbarem Raum innerhalb der Gondel, insbesondere in der Höhe führt. Außerdem soll die Struktur des Generatorträgers verstärkt werden, um höhere Lasten in den Maschinenträger einleiten zu können. Durch die Nutzung von Synergieeffekten sollen im Bereich Generatorträger und Gondelverkleidung Kosten eingespart werden.

Erfindungsgemäß wird die Aufgabe durch Gondel für eine Windenergieanlage mit den Merkmalen aus Anspruch 1 gelöst. Vorteilhafte Ausgestaltungen bilden den Gegenstand der Unteransprüche.

Die erfindungsgemäße Gondel für eine Windenergieanlage umfasst einen Maschinenträger als Tragstruktur, welcher mit einem Turm der Windenergieanlage in Verbindung steht, und einen Generatorträger. Weiterhin ist eine nichttragende Gondelverkleidung umfasst, wobei der Generatorträger mit der nichttragenden Gondelverkleidung mechanisch verbunden ist, und der Generatorträger aus zwei sich parallel gegenüber liegenden, seitlichen Hauptträgern, einem Boden und mehreren Querträgern besteht. Der Generatorträger ist erfindungsgemäß direkt mit der Gondelverkleidung mechanisch verbunden und übernimmt im unteren Bereich der Gondel Funktionen der Gondelverkleidung. Der Generatorträger ersetzt mit den seitlichen Hauptträgern und dem Boden im unteren Bereich der Gondel die Gondelverkleidung, sodass ein Generator und weitere Komponenten direkt auf dem Boden im unteren Bereich der Gondel platziert werden können, wobei die Hauptträger in ihrer geometrischen Formgestaltung exakt der Außenkontur der nichttragenden Gondelverkleidung folgen. Es können hier unlösbare oder lösbare mechanische Verbindungen vorgesehen werden.

Die Hauptträger sind spiegelgleich aufgebaut.

Für eine Ausführungsform bestehen die Hauptträger aus einem Guss, vorzugsweise aus Grauguss.

Für eine weitere Ausführungsform haben die Hauptträger einen quer geteilten Aufbau aus jeweils zwei Gussteilen, welche durch Flanschverbindungen zusammengefügt sind, und vorzugsweise aus Grauguss bestehen.

Für eine weitere Ausführungsform weisen die Hauptträger für den Anschluss an den Maschinenträger jeweils eine vordere gerade Endfläche als Flansch auf.

Für eine weitere Ausführungsform sind nach außen gerichtete Flächen der Hauptträger im Wesentlichen glatt und nach innen gerichtete Seiten der Hauptträger sind im Wesentlichen hohl ausgebildet, so dass ein u-förmiger Querschnitt entsteht, wobei in diesen u-förmigen Querschnitt voneinander beabstandet Doppelrippenkonstruktionen angeordnet sind, welche einer Aufnahme der Querträger dienen.

Zur Herausbildung des Bodens sind ein oder mehrere Blechelemente eines beliebigen Materials an den seitlichen Hauptträgern befestigt.

Durch die erfindungsgemäße Lösung wird innerhalb der Gondel mehr nutzbarer Raum, insbesondere in der Höhe, geschaffen. Der geschaffene Bauraum kann unterhalb der Tragstruktur für die Anordnung von Anlagenkomponenten genutzt werden.

Durch die Verstärkung/Versteifung der Struktur des Generatorträgers können höhere Lasten in den Maschinenträger eingeleitet werden.

Durch die Substitution von GFK zu Metall im Bodenbereich der Gondelverkleidung wird eine Absenkung der Brandlast erreicht, sodass ein Vorteil entsteht, wenn beispielsweise ein Trafo in die Gondel integriert werden soll.

Anders als beim Stand der Technik, entfällt ein Großteil der notwendigen Anbindungskonstruktionen. Auch die Anbindung der Pfosten eines Krantragwerks gestaltet sich durch die Erfindung konstruktiv einfacher.

Ein weiterer Vorteil der Erfindung ist die Einsparmöglichkeit im Bereich Logistikkosten. Der Generatorträger nach dem Stand der Technik erfordert als Schweißkonstruktion immer einen Großtransport, sofern er nicht geteilt ausgeführt wird. Die erfindungsgemäßen Komponenten können in Standardcontainern untergebracht werden. Der Transport ist damit um ein Vielfaches kostengünstiger. Zudem fällt nun auch der Transport der großen GFK-Teile für den Boden der Gondelverkleidung weg, da nur noch im vorderen Bereich ein GFK-Boden benötigt wird. Die benötigte Stellfläche ist für die erfindungsgemäß verwendeten Bleche im Vergleich zur Stellfläche für GFK-Teile sehr gering und bietet Vorteile in der Lagerlogistik sowie bei der Materialbereitstellung in der Produktion.

### Ausführung der Erfindung

Die Erfindung wird anhand eines Ausführungsbeispiels näher erläutert. Hierzu zeigen
- Figur 1: Stand der Technik
- Figur 2: Gondel mit Maschinenträger und Generatorträger und Anlagenkomponenten (ohne Gondelverkleidung),
- Figur 3: erfindungsgemäßer Generatorträger mit Anordnung von Hauptträgern, Boden und Querträgern,
- Figur 4: erfindungsgemäßer Generatorträger in einer Explosionszeichnung von Hauptträgern, Boden und Querträgern,
- Figur 5a, b: Schnittzeichnung durch die Gondel in Querrichtung.

Figur 1 zeigt den Stand der Technik. Die Tragstruktur besteht aus einem Maschinenträger 1 und einem Generatorträger 2, wobei der Maschinenträger 1 als Gussteil und der Generatorträger 2 als Schweißkonstruktion gefertigt sind. Diese benötigen im Innern der Gondelverkleidung sehr viel Platz. Die einzelnen Komponenten, wie beispielsweise der Generator werden auf dieser Tragstruktur 3 angeordnet. Die Tragstruktur 3 ist innerhalb der Gondelverkleidung angeordnet.

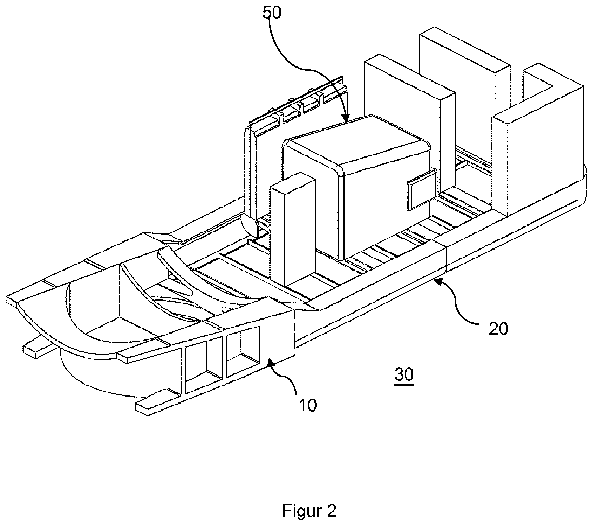

Die erfindungsgemäße Gondel für eine Windenergieanlage setzt sich aus einer Tragstruktur 30 und einer aufgesetzten nichttragenden Gondelverkleidung (hier nicht gezeigt) zusammen. Dadurch ist die Tragstruktur 30 Teil der Gondelverkleidung. Wie aus Figur 2 ersichtlich, besteht die Tragstruktur 30 aus einem Maschinenträger 10, auf welchem das Getriebe, die Rotorwelle, das Rotorlager und der Azimutantrieb (Komponenten nicht dargestellt) gelagert sind, und einem mit dem Maschinenträger 10 verbundenen Generatorträger 20, auf welchem in der Hauptsache der Generator 50 gelagert ist. Der Maschinenträger 10 steht außerdem mit dem Turm (nicht dargestellt) der Windenergieanlage in Verbindung.

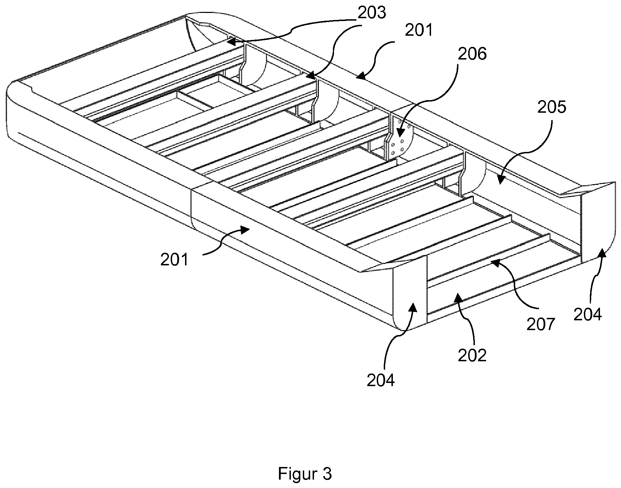

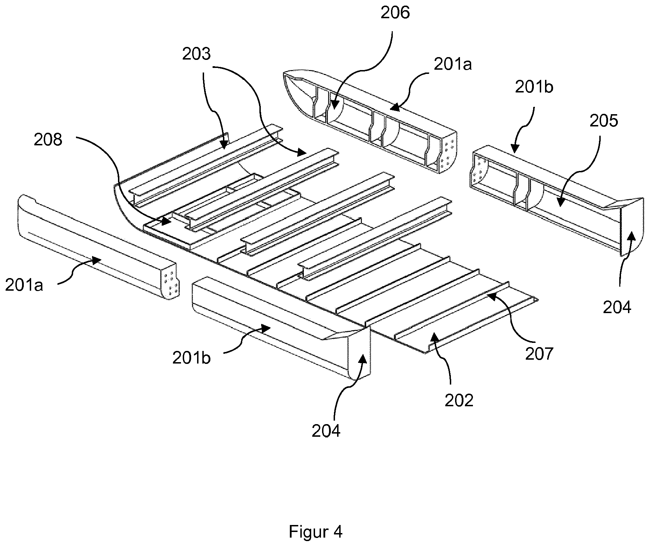

Der Generatorträger 20 ist direkt an die Hülle der Gondelverkleidung 40 angebunden. Der Generatorträger 20 wird in Figur 3 in einer erfindungsgemäßen Anordnung und in Figur 4 in einer explosiven Darstellung gezeigt und ist in einer funktionsintegralen Bauweise hergestellt. Der Generatorträger 20 besteht aus zwei sich parallel gegenüber liegenden, seitlichen Hauptträgern 201, einem Boden aus ein oder mehreren Blechelementen 202 und mehreren Querträgern 203. Die Hauptträger 201 sind aus einem Gussmaterial, vorzugsweise aus Grauguss, hergestellt und spiegelgleich angeordnet. Die seitlichen Hauptträger 201 haben eine langgestreckte Form und sind in ihrer äußeren Formgebung den Gondelkonturen angepasst, wobei Höhe und Länge variieren können. In diesem Ausführungsbeispiel ist ein quer geteilter Aufbau aus jeweils zwei Gussteilen 201a und 201b, welche durch übliche Flanschverbindungen miteinander verbunden sind, dargestellt. Ein Hauptträger 201 kann auch aus einem einzigen Gussteil hergestellt sein. Die seitlichen Hauptträger 201 weisen für den Anschluss an den Maschinenträger 10 jeweils eine vordere gerade Endfläche 204 für eine Flanschverbindung auf. Diese Endfläche 204 kann mit ovalen und/oder kreisrunden Öffnungen versehen sein, um die Flanschverbindung oder beispielsweise eine Durchführung von Kabeln zu ermöglichen.

Die äußeren Flächen der Hauptträger 201 sind im Wesentlichen glatt. Die zum Innern der Gondel gerichteten Seiten der Hauptträger 201 sind im Wesentlichen hohl ausgebildet, so dass ein u-förmiger Querschnitt 205 entsteht. In diesem u-förmigen Querschnitt 205 sind voneinander beabstandete Doppelrippenkonstruktionen 206 angeordnet, welche der Aufnahme der Querträger 203 dienen. Die Doppelrippenkonstruktionen 206 tragen gleichzeitig zu einer Stabilisierung der Hauptträger 201 bei.

Die Hauptträger 201 folgen in ihrer geometrischen Formgestaltung exakt der Außenkontur der Gondelverkleidung 40 und übernehmen damit teilweise Funktionen der Gondelverkleidung 40. Der Boden einer herkömmlichen Gondel, welcher sonst aus GFK-Teilen gefertigt ist, wird erfindungsgemäß ersetzt durch die seitlichen Hauptträger 201 zusammen mit den Querträgern 203 und ein oder mehreren Blechelementen 202. Damit entfallen Anbindungskonstruktionen und es wird Bauraum frei.

Die Hauptträger 201 weisen durch ihre relativ große Höhe (hohes Widerstandsmoment) und ihre profilierte Formgebung (Formsteifigkeit) eine hohe Gesamtsteifigkeit auf.

Die Querträger 203 sind vorzugsweise aus kostengünstigen Standardprofilen aus Stahl hergestellt, in der Regel Standard Halbzeuge, zum Beispiel IPB-Profile. Die Querträger 203 sind mit den Doppelrippenkonstruktionen 206 der Hauptträger 201 mechanisch verbunden. An den seitlichen Hauptträgern 201 sind ein oder mehrere Blechelemente 202 eines beliebigen Materials, bevorzugt Stahl, befestigt. Auf diese Art erreicht der Generatorträger 20 eine ausreichende Stabilität für die Aufnahme des Generators 50 und der anderen notwendigen Komponenten für die Windenergieanlage, welche im hinteren Bereich der Gondel angeordnet sind. In oder auf den Blechelementen 202 können außerdem Versteifungsrippen 207 eingearbeitet bzw. aufgesetzt sein. Ebenso ist im Boden ein Einstieg 208 für das Wartungspersonal vorzusehen. Die durch den Zusammenbau der genannten Teile entstehende Wanne, kann zum Auffangen von Flüssigkeiten genutzt werden und ist zudem begehbar. Da kein GFK im Bodenbereich verwendet wird, sondern Stahl und Guss, wird die Brandlast herabgesetzt.

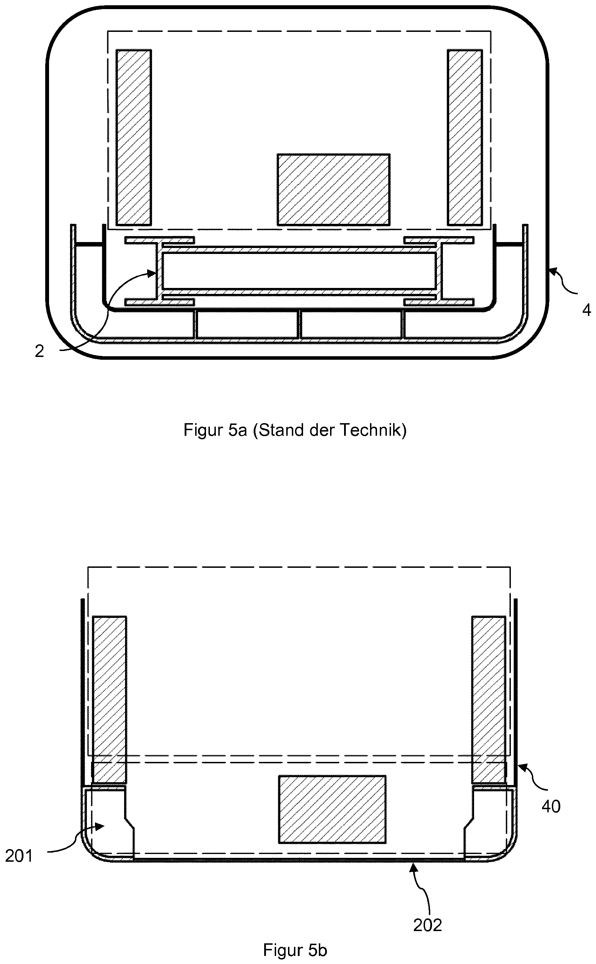

Die Figur 5 zeigt eine Schnittzeichnung durch die Gondel in Querrichtung mit einem angedeuteten Generator sowie weiteren Komponenten der Windenergieanlage, wobei Figur 5a den Stand der Technik darstellt und Figur 5b die erfindungsgemäße Lösung. Der Generator 50 und die weiteren Komponenten (Figur 5b), wie z.B. ein Trafo und ein Hauptumrichter, können direkt auf dem Boden oder den Querträgern 203 montiert/platziert werden, so dass der bisher nicht genutzte Bauraum im unteren Bereich der Gondel ausgenutzt werden kann. Die offene Bodenwanne bietet zudem Raum für eine Integration von beispielsweise Kabeln auf dem Boden, z.B. unter der Begehebene.

In der Figur 5b wird außerdem ersichtlich, dass die Gondelverkleidung 40 direkt mit den Hauptträgern 201 verbunden ist. Im Stand der Technik, wie in Figur 5a gezeigt, muss die Gondelverkleidung 4 um die gesamte Konstruktion angeordnet werden.

Da es sich bei der vorhergehend, detailliert beschriebenen Gondel für eine Windenergieanlage um ein Ausführungsbeispiel handelt, kann sie in üblicher Weise vom Fachmann in einem weiten Umfang modifiziert werden, ohne den Bereich der Erfindung zu verlassen. Insbesondere können auch die konkreten Ausgestaltungen der Hauptträger 201 in anderer Form als in der hier beschriebenen folgen, beispielsweise als ein durchgehendes Tragteil. Ebenso kann die gesamte Tragstruktur 30 in einer anderen Form ausgestaltet werden, wenn dies aus Platzgründen bzw. designerischen Gründen notwendig ist. Weiter schließt die Verwendung der unbestimmten Artikel "ein" bzw. "eine" nicht aus, dass die betreffenden Merkmale auch mehrfach vorhanden sein können.

### Bezugszeichen

- 1: Maschinenträger (Stand der Technik)
- 2: Generatorträger (Stand der Technik)
- 3: Tragstruktur (Stand der Technik)
- 4: Gondelverkleidung (Stand der Technik)
- 10: Maschinenträger (Erfindung)
- 20: Generatorträger (Erfindung)
- 201: Hauptträger 201a und 201b Gussteile des Hauptträgers
- 202: Blechelemente des Bodens
- 203: Querträger
- 204: Endfläche
- 205: U-förmiger Querschnitt der Hauptträger 201
- 206: Doppelrippenkonstruktion der Hauptträger 201
- 207: Versteifungsrippen
- 208: Einstieg
- 30: Tragstruktur (Erfindung)
- 40: Gondelverkleidung (Erfindung)
- 50: Generator

## Patentansprüche

1. Gondel für eine Windenergieanlage, welche als Tragstruktur (30) einen Maschinenträger (10), welcher mit einem Turm der Windenergieanlage in Verbindung steht, und einen Generatorträger (20) umfasst, und umfassend eine nichttragende Gondelverkleidung (40), wobei der Generatorträger (20) mit der nichttragenden Gondelverkleidung (40) mechanisch verbunden ist, und der Generatorträger (20) aus zwei sich parallel gegenüber liegenden, seitlichen Hauptträgern (201), einem Boden und mehreren Querträgern (203) besteht, **dadurch gekennzeichnet, dass**
der Generatorträger (20) mit den seitlichen Hauptträgern (201) und dem Boden im unteren Bereich der Gondel die Gondelverkleidung (40) ersetzt, sodass ein Generator (50) und weitere Komponenten direkt auf dem Boden im unteren Bereich der Gondel platziert werden kann, wobei die Hauptträger (201) in ihrer geometrischen Formgestaltung exakt der Außenkontur der nichttragenden Gondelverkleidung (40) folgen und der Generatorträger (20) Funktionen der Gondelverkleidung (40) übernimmt.

2. Gondel nach Anspruch 1, **dadurch gekennzeichnet, dass** die Hauptträger (201) spiegelgleich aufgebaut sind.

3. Gondel nach Anspruch 1 oder 2, **dadurch gekennzeichnet, dass** die Hauptträger (201) aus einem Guss, vorzugsweise aus Grauguss bestehen.

4. Gondel nach Anspruch 1 oder 2, **dadurch gekennzeichnet, dass** die Hauptträger (201) einen quer geteilten Aufbau aus jeweils zwei Gussteilen (201a, 201b), welche durch Flanschverbindungen zusammengefügt sind, haben und vorzugsweise aus Grauguss bestehen.

5. Gondel nach Anspruch 1, 2, 3 oder 4, **dadurch gekennzeichnet, dass** die Hauptträger (201) für den Anschluss an den Maschinenträger (10) jeweils eine vordere gerade Endfläche (204) als Flansch aufweisen.

6. Gondel nach Anspruch 1, 2, 3 oder 4, **dadurch gekennzeichnet, dass** nach außen gerichtete Flächen der Hauptträger (201) im Wesentlichen glatt sind und nach innen gerichtete Seiten der Hauptträger (201) im Wesentlichen hohl ausgebildet sind, so dass ein u-förmiger Querschnitt (205) entsteht, wobei in diesen u-förmigen Querschnitt (205) voneinander beabstandet Doppelrippenkonstruktionen (206) angeordnet sind, welche einer Aufnahme der Querträger (203) dienen.

7. Gondel nach Anspruch 1, **dadurch gekennzeichnet, dass** zur Herausbildung des Bodens ein oder mehrere Blechelemente (202) eines beliebigen Materials an den seitlichen Hauptträgern (201) befestigt ist.

## Claims

1. Nacelle for a wind turbine which comprises, as the supporting structure (30), a machine support (10) which is connected to a tower of the wind turbine, and comprises a generator support (20), and comprising a non-load-bearing nacelle cladding (40), wherein the generator support (20) is mechanically connected to the non-load-bearing nacelle cladding (40), and the generator support (20) consists of two mutually parallel and opposite lateral main beams (201), a floor and multiple transverse beams (203),
**characterized in that**
in the lower region of the nacelle, the generator support (20) with the lateral main beams (201) and the floor replaces the nacelle cladding (40) so that a generator (50) and further components can be placed directly on the floor in the lower region of the nacelle, wherein the geometric shape of the main beams (201) exactly follows the outer contour of the non-load-bearing nacelle cladding (40) and the generator support (20) takes on functions of the nacelle cladding (40).

2. Nacelle according to Claim 1, **characterized in that** the main beams (201) are mirror images of each other.

3. Nacelle according to Claim 1 or 2, **characterized in that**
the main beams (201) are made of a cast material, preferably grey cast iron.

4. Nacelle according to Claim 1 or 2, **characterized in that**
the main beams (201) have a transversely divided construction of in each case two cast parts (201a, 201b) which are joined by flange connections, and are preferably made of grey cast iron.

5. Nacelle according to Claim 1, 2, 3 or 4,
**characterized in that**
the main beams (201) each have, for connection to the machine support (10), a front straight end face (204) as the flange.

6. Nacelle according to Claim 1,2, 3 or 4,
**characterized in that**
outwardly oriented surfaces of the main beams (201) are essentially smooth and inwardly oriented sides of the main beams (201) are essentially hollow resulting in a U-shaped cross section (205), wherein mutually spaced-apart double-rib constructions (206) are arranged in this U-shaped cross section (205), which serve for accommodating the transverse beams (203).

7. Nacelle according to Claim 1, **characterized in that** to form the floor one or more sheet elements (202) of any material is/are attached to the lateral main beams (201).

## Revendications

1. Nacelle destinée à une éolienne comprenant, comme structure porteuse (30), un support de machine (10) relié à une tour de l'éolienne et un support de générateur (20), ladite nacelle comprenant un habillage de nacelle non porteur (40), le support de générateur (20) étant relié mécaniquement à l'habillage de nacelle non porteur (40) et le support de générateur (20) comprenant deux poutres principales latérales (201) disposées parallèlement l'une en face de l'autre, un fond et une pluralité de poutres transversales (203), **caractérisée en ce que** le support de générateur (20) pourvu des poutres principales latérales (201) et du fond remplace dans la région inférieure de la nacelle l'habillage de nacelle (40) de manière à pouvoir placer un générateur (50) et d'autres composants directement sur le fond dans la région inférieure de la nacelle, les poutres principales (201) épousant quant à leur forme géométrique exactement le contour extérieur de l'habillage de nacelle non porteur (40) et le support de générateur (20) prenant en charge des fonctions de l'habillage de nacelle (40).

2. Nacelle selon la revendication 1, **caractérisée en ce que** les poutres principales (201) sont conçues de manière à présenter une symétrie spéculaire.

3. Nacelle selon la revendication 1 ou 2, **caractérisée en ce que** les poutres principales (201) sont en fonte, de préférence en fonte grise.

4. Nacelle selon la revendication 1 ou 2, **caractérisée en ce que** les poutres principales (201) ont une structure divisée transversalement, comprenant chacune deux pièces en fonte (201a, 201b) qui sont assemblées par des liaisons à brides, et sont de préférence en fonte grise.

5. Nacelle selon la revendication 1, 2, 3 ou 4, **caractérisée en ce que** les poutres principales (201) destinées à être reliées au support de machine (10) présentent chacune une surface d'extrémité avant plate (204) servant de bride.

6. Nacelle selon la revendication 1, 2, 3 ou 4, **caractérisée en ce que** des surfaces, dirigées vers l'extérieur, des poutres principales (201) sont sensiblement lisses et des côtés, dirigés vers l'intérieur, des poutres principales (201) sont sensiblement creux de manière à former une section transversale en forme de U (205), des structures à double nervure (206) étant disposées de façon à être espacées les unes des autres dans cette section transversale en forme de U (205), lesquelles servent à recevoir les barres transversales (203).

7. Nacelle selon la revendication 1, **caractérisée en ce qu'**au moins un élément en tôle (202) en n'importe quel matériau est fixé aux poutres principales latérales (201) pour former le fond.
